# EUROPEAN PATENT APPLICATION

(11) **EP 2 843 961 A1**
(43) Date of publication of application: **04.03.2015**
(21) Application number: 14177814.2
(22) Date of filing: 21.07.2014
(51) Int. Cl.: H04N 21/45, H04N 21/858, H04N 21/442, H04N 21/41

(54) **Method for relaying contents in contents reproducing device**

(30) Priority: 30.08.2013 KR 20130103586
(71) Applicant: Humax Co., Ltd., Yongin-si 449-934 (KR)
(72) Inventor: Kang, Teho, 446-594 Yongin-si (KR); Yun, Woonyong, 463-932 Seongnam-si (KR)
(74) Representative: Zardi, Marco

(57) **Abstract**

The present invention is related to a method for relaying contents in a contents reproducing device. In one embodiment, reproducibility of content is determined, and in case reproduction of the content is not possible, existence of the content reproducible in a second device is notified, where link information about a device to be connected to receive the content can be provided together. In another embodiment, reproducibility of content is determined; in case reproduction of the content is not possible, one or more second devices connected wired or wirelessly is notified of existence of the content reproducible in the corresponding second device; and if a request for reproducing the content is received from the one or more second devices, while providing information about a second device which has sent the reproduction request to a server providing the content, the server can be requested to provide the content to the second device.

## Description

### BACKGROUND OF THE INVENTION

### Field of the Invention

The present invention is related to a method for relaying contents in a contents reproducing device and more particularly, a method for relaying contents that cannot be reproduced in a contents reproducing device to another device capable of reproducing the contents.

### Discussion of the Related Art

Various kinds of digital broadcast services such as terrestrial broadcast, satellite broadcast, and cable broadcast are in service, and the number of broadcast channels and contents provided by the respective broadcast services are getting larger, subsequently leading to a wide distribution of broadcast receivers such as set-top boxes and TVs capable of receiving the digital broadcast services.

Also set-top boxes such as Google TV and Apple TV, capable of providing VOD (Video On Demand) services and Internet connection as well as receiving broadcast programs have appeared in the market, which facilitates both quantitative expansion and qualitative enhancement of broadcast programs and content services provided through the set-top boxes.

A set-top box is such kind of a device used for a long time without replacement once a user purchases the set-top box or the user is provided with the set-top box by a cable or satellite service provider. In other words, a set-top box has a long replacement period, and people tend to consider the set-top box just as a means to watch TV programs. In this regard, price resistance of the set-top box is large; physical specifications of most of set-top boxes used at home or shops are much inferior to those of smart phones or smart pads, replacement period of which is quite fast. Thus, most of set-top boxes are unable to keep up with diversification or development speed of provided services.

For example, though it is a common practice nowadays that most of services developed by set-top box manufacturers or providers of cable or satellite broadcast services are based on web or HTML5 technology, browsers or input interfaces embedded in a set-top box fall short of performance requirements, failing to spread consumption of a large amount of excellent contents through the set-top box.

### SUMMARY OF THE INVENTION

The present invention has been made in an effort to alleviate the situation and solve the problem above, and the object of the present invention is to provide a method for reproducing contents that cannot be reproduced by a set-top box by relaying the contents to a high-performance device such as a smart phone.

Another object of the present invention is to provide a method for effectively reproducing additional contents of different specifications related to the contents being reproduced through a set-top box.

To achieve the object, a method for relaying contents in a contents reproducing device according to one embodiment of the present invention comprises determining whether content is reproducible; and in case reproduction of the content is not possible, notifying of existence of the content reproducible in a second device, where the notifying provides link information about a device to be connected to receive the content.

A method for relaying contents in a contents reproducing device according to another embodiment of the present invention comprises determining whether content is reproducible; in case reproduction of the content is not possible, notifying one or more second devices connected wired or wirelessly of existence of the content reproducible in the corresponding second device; and if a request for reproducing the content is received from the one or more second devices, while providing information about a second device which has sent the reproduction request to a server providing the content, requesting the server to provide the content to the second device.

In one embodiment, the notifying can be expressed by displaying a barcode or multi-dimensional code representing the link information.

In one embodiment, the notifying can provide one or more second devices with a message including URL meant for connecting to a server providing the content.

In one embodiment, the notifying can transmit a message inquiring whether to reproduce the content in the corresponding second device to the one or more second devices.

In one embodiment, the information about a second device can be any one of a phone number, UUID (Universally Unique IDentifier), MAC address, and device identifier.

In one embodiment, the contents can be additional contents related to the main contents being reproduced through the contents reproducing device.

A contents reproducing device according to a yet another embodiment of the present invention comprises a network unit configured to be connected to a server and communicate data; a reproducing unit configured to reproduce contents; and a control unit configured to determine whether content provided from the server is reproducible, in case reproduction of the content is not possible, notify of existence of the content reproducible in a second device, and provide link information about a device to be connected to receive the content.

A contents reproducing device according to a still another embodiment of the present invention comprises a network unit configured to be connected to a server and communicate data; a wireless communication unit configured to connect to a second device wirelessly; a reproducing unit configured to reproduce contents; and a control unit configured to determine whether content provided from the server is reproducible, in case reproduction of the content is not possible, notify one or more second devices connected through the wireless communication unit of existence of the content reproducible in the corresponding second device, and if a request for reproducing the content is received from the one or more second devices, while providing information about the second device which has sent the reproduction request to the server by controlling the network unit, request the server to provide the content to the second device.

In one embodiment, the contents reproducing device further comprises a graphic generating unit configured to generate a screen expressing information by using text or drawings, and the control unit can generate a barcode or multi-dimensional code expressing the link information by controlling the graphic generating unit and display the generated code on the screen.

In one embodiment, the contents reproducing device further comprises a wireless communication unit configured to connect to the second device wirelessly, and the control unit can provide the one or more second devices with a message including URL meant for connecting to the server providing the content by controlling the wireless communication unit.

In one embodiment, the control unit can send a message inquiring whether to reproduce the content in the corresponding second device to the one or more second devices by controlling the wireless communication unit.

### BRIEF DESCRIPTION OF THE DRAWINGS

The accompanying drawings, which are included to provide a further understanding of the present invention and constitute a part of specifications of the present invention, illustrate embodiments of the present invention and together with the corresponding descriptions serve to explain the principles of the present invention.
FIG. 1 illustrates a situation where the content not reproducible by a set-top box is redirected to a different device according to one embodiment of the present invention;
FIG. 2 illustrates a structure of a set-top box according to one embodiment of the present invention;
FIG. 3 illustrates a structure of a contents reproducing device according to one embodiment of the present invention;
FIG. 4 is a flow diagram illustrating operation of a device receiving contents from a contents providing server as a set-top box provides the device with link information about the server according to one embodiment of the present invention; and
FIG. 5 is a flow diagram illustrating operation of a server providing contents to a device capable of reproducing contents as a set-top box provides the server with identification information of the device according to another embodiment of the present invention.

### DETAILED DESCRIPTION OF THE INVENTION

In what follows, embodiments of a method for relaying contents in a contents reproducing device according to the present invention will be described in detail with reference to appended drawings.

A set-top box receives broadcast programs from a broadcast station and reproduces the received broadcast programs; or receives contents from a server connected through a network by using a downloading or streaming method and reproduces the received contents.

In the case of broadcast programs, since contents are provided in one-way direction and the set-top box is designed to receive the broadcast programs, no problem is caused in reproducing the broadcast programs.

Similarly, in case contents are provided from a server through a VOD service and reproduced, since the server provides the same contents but in various encoding options (different resolution, CODEC, and so on), the set-top box is still able to reproduce the contents by selecting the one reproducible in the set-top box.

However, since broadcast programs or additional contents accompanying VOD contents may be updated in real-time and provided in a new format, the set-top box may fail to reproduce the additional contents though the set-top box is capable of reproducing the corresponding programs or contents. Similarly, in the case of interactive services related to broadcast programs or VOD contents, if the services are provided in a new format, legacy set-top boxes are unable to carry out the services.

Taking account of such a situation, instead of developing a set-top box capable of handling all of the new codecs or service functions that may emerge in a future, it would be more advantageous to find a solution of redirecting those contents difficult or impossible to be reproduced in a set-top box, additional contents, and interactive services to smart devices characterized by a short replacement period, easy installation of additional applications, and an excellent input interface for appropriate processing thereof

Therefore, in case contents or services are deemed to be impossible for a set-top box to reproduce or come with a uncomfortable user interface when reproducibility of the contents or complexity of the input interface is determined by the set-top box, the present invention relays the contents or services to smart devices for reproduction thereof.

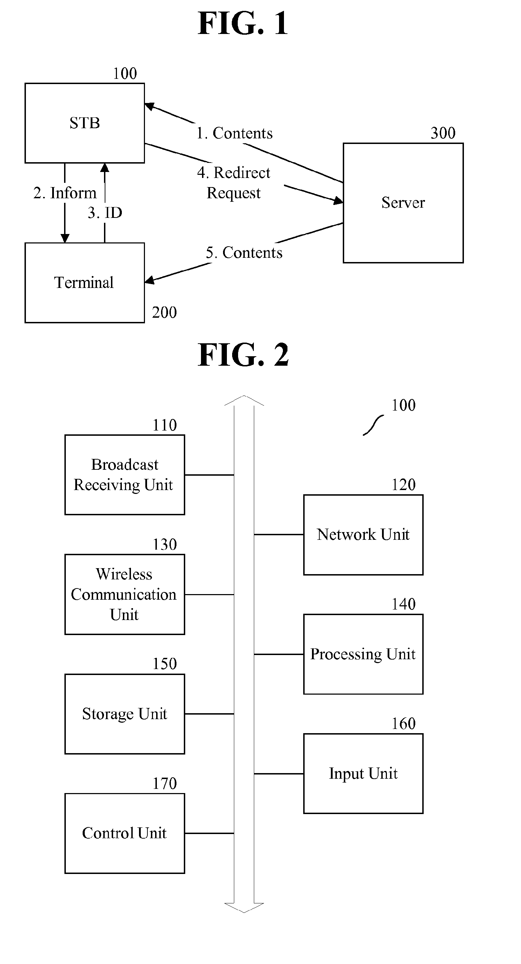

FIG. 1 illustrates a situation where the content not reproducible by a set-top box is redirected to a different device according to one embodiment of the present invention.

The set-top box (STB) 100 reproducing broadcast programs or contents receives additional content or metadata related to the additional content from a server 300 and determines whether the corresponding additional content is reproducible in the set-top box 100. In case it is determined that reproduction is not possible, the set-top box 100 notifies a smart device 200 of existence of the additional content reproducible in the smart device 200. If the smart device 200 requests reproduction of the corresponding additional content while sending identification information of the smart device, the set-top box 100 requests relaying the corresponding additional content to the corresponding smart device 200 while sending identification information of the smart device to the server 300. The server 200 transmits the corresponding additional content to the corresponding smart device 200, and the smart device 200 is then able to reproduce the corresponding additional content.

The set-top box 100 and the server 300 are connected to each other through a network such as the Internet. The set-top box 100 and the smart device 200 are connected to each other through various types of short range communication methods such as Wi-Fi, Bluetooth, RFID (Radio Frequency IDentification), IrDA (Infrared Data Association), UWB (Ultra Wideband), and ZigBee while the smart device 200 and the server 300 are connected to each other through a network such as the Internet or a mobile communication network such as 3G and 4G, communicating control data or content data with each other.

In the embodiment of FIG. 1, it is assumed that the subject requesting the server 300 to transmit additional content that cannot be reproduced by the set-top box 100 to the smart device 200 is the set-top box 100, and identification information of the smart device 200 is used as a parameter. In another embodiment of the present invention, however, the smart device 200 can directly request the server 300 to request transmission of the additional content that cannot be reproduced by the set-top box 100. In this case, link information about the server 300 can be used as a parameter.

FIG. 2 illustrates a structure of a set-top box according to one embodiment of the present invention, which relays content that cannot be reproduced to a smart device. The set-top box according to the present invention may correspond to a broadcast receiver, television, IP-TV receiver, OTT (Over The Top), or smart set-top box, which receives and reproduces terrestrial broadcast; satellite broadcast; digital broadcast such as cable broadcast and IP broadcast; and contents through the IP network.

As shown in FIG. 2, the set-top box 100 according to the present invention can comprise a broadcast receiving unit 110, network unit 120, wireless communication unit 130, processing unit 140, storage unit 150, input unit 160, and control unit 170.

The broadcast receiving unit 110 can receive one or more of terrestrial broadcast, satellite broadcast, and cable broadcast. The broadcast receiving unit 110 can comprise a tuner for receiving a broadcast, demodulator, demultiplexer, parser, and buffer memory.

The tuner tunes to a signal band selected by the user from a broadcast signal (for example, terrestrial, cable, or satellite broadcast signal) received through a connected RF signal line such as a coaxial cable, demodulates an input digital signal modulated by QPSK (Quadrature Phase Shift Keying), QAM (Quadrature Amplitude Modulation), VSB (Vestigial SideBand), or OFDM (Orthogonal Frequency Division Multiplexing) technique through the tuned signal band, and outputs the demodulated digital signal in the form of a digital stream.

The demultiplexer selects a transport packet and outputs the selected transport packet, where the transport packet carries video, audio, subtitle data, management data (for example, program specific information (PSI)), and so on belonging to a single program selected among transport streams of multiple programs in an output digital stream. A transport packet ID, namely PID acts as the basis on which the demultiplexer can selectively output only the transport stream corresponding to one program in a digital stream, where the transport packet ID can be checked from program specific information (PSI) such as PAT (Program Association Table) and PMT (Program Map Table) obtained from the corresponding tuned channel and delivered before selectively outputting the transport stream.

The parser collects only payload data by removing headers from transport packets of the respective transport streams fed by the demultiplexer, classifies the payload data according to data types such as video, audio, and subtitles, and outputs the classified data in the form of PES packets to the buffer memory.

The buffer memory temporarily stores PES packets separately output according to their type through the parser by referencing header information of the PES packets into the respective areas designated by the data type (for example, video, audio, subtitles, and so on).

The network unit 120 is connected to an external contents providing server and performs a function of receiving additional information related to a broadcast program received through the broadcast receiving unit 110 or additional contents related to the contents desired by the user. The network unit 120 also performs a function of sending output data processed by the processing unit 140 to an output device such as a TV or speaker among devices constituting, for example, a home network. Furthermore, the network unit 120 performs a function of communicating with other devices connected to the home network or communicating control signals for controlling other devices.

The wireless communication unit 130 is a short range wireless communication module based on Wi-Fi, Bluetooth, or ZigBee technology, intended for outputting an audio signal or video signal reproduced through the processing unit 140 to other devices wirelessly or communicating data with other devices. The wireless communication unit 130 can transmit output data processed through the processing unit 140 to a wireless speaker, communicate data with a smart device, or perform a function of a remote control unit for the set-top box 100 through the smart device.

The processing unit 140, intended for reproducing and outputting contents, decodes PES packets of a broadcast program stored in the buffer memory of the broadcast receiving unit 110 according to the respective data types, contents received through the network unit 120 and buffered being divided by small units, or contents stored in the storage unit 150 by using the corresponding internal decoding module according to the respective data types; reconstructs the original A/V (Audio/Video) signal; and outputs the reconstructed A/V signal to an output device connected wired or wirelessly.

The storage unit 150 is intended for storing data of a high-capacity device such as a hard disk and SSD (Solid State Disk). The storage unit 150 can store digital streams output from the broadcast receiving unit 110 or contents transmitted from an external server connected through the network unit 120 or received through an interface such as USB and IEEE 1394.

The input unit 160, intended for receiving contents of the set-top box 100 and request or settings of the user related to reproduction of contents, can be implemented by a keyboard, mouse, keypad, touchpad, touchscreen, or a pair of remote control unit and a remote control unit receiving unit.

The set-top box 100 can further comprise a graphic generating unit generating a screen made of text or drawings related to the set-top box 100, generating a menu meant for changing configuration of the set-top box 100, or generating a message guiding a response according to the user's request; and outputting the generated screen, menu, or message as a video signal. The video signal of the generated screen, menu, or message and the video signal output from the processing unit 140 are overlapped with each other in a mixer and expressed visually through an electronic device equipped with a conventional screen display function, such as TV and monitor.

The set-top box 100 can further comprise an interface unit including connection ports for data communication, such as a memory slot, USB, SCSI, E-SATA, and Firewire; and a control unit for controlling data flow through the connection ports. The set-top box 100 can communicate data with an external storage device such as SD (Secure Digital) card and USB memory through the interface unit.

The control unit 170 controls individual elements constituting the set-top box and converts a broadcast signal or reproducing signal of contents into an audio/video reproducing signal according to the user's request and/or predefined condition to be output on a TV screen or to a speaker. The control unit can include a system memory (not shown) providing a space to store data required for control operation, environment setting, or running a process; and an operating system (not shown) driving hardware resources of the set-top box and performing exchanging appropriate signals and/or information with the corresponding resources by executing command codes such as firmware.

If receiving additional contents related to main contents being reproduced in a current broadcast program or through a VOD service or metadata (data describing an encoding method, file size, transport method, and so on of the additional contents) of the additional contents from the server 300 through the network unit 120, the control unit 170 determines whether the processing unit 140 can decode and reproduce the additional contents and if it is found that reproduction thereof is possible, reproduces the additional contents along with the broadcast program or main contents by controlling the processing unit 140.

On the other hand, in case the processing unit 140 does not have a module which can decode the additional contents, the control unit 170 sends to the smart device 200 a message informing one or more smart devices 200 connected through the wireless communication unit 130 (for example, through pairing) of existence of the additional contents to be reproduced through the corresponding device, and the smart device 200 displays the message transmitted by the paired set-top box 100 on the screen so that the user can choose whether to reproduce the additional contents in the corresponding device.

In case the user transmits identification information with which the corresponding smart device 200 can be identified while requesting the corresponding device to reproduce additional contents, the control unit 170 can control the network unit 120 to transmit identification information of the smart device 200 and identification information of the corresponding additional contents to the server 300 and request the server 300 to transmit the additional contents to the smart device 200.

Also, in case the processing unit 140 is unable to decode the additional contents, the control unit 170 displays a message informing of the processing unit's inability to decode the additional contents through a screen, generates a multi-dimensional code (or barcode) such as QR code including link information used to connect to the server 300 providing the additional contents and receive the corresponding additional contents; and displays the generated multi-dimensional code through the screen. Thus the control unit 170 enables the user of the smart device 200 to capture a QR code by using a camera module and based on the captured QR code, connect to the server 300, receive the additional contents, and reproduce the received additional contents.

In addition, in case the processing unit 140 is unable to decode the additional contents, the control unit 170 sends to the smart device 200 a message informing one or more smart devices 200 connected through the wireless communication unit 130 about existence of additional contents to be reproduced through the corresponding device. At this time, the control unit 170 transmits link information with which the smart device can be connected to the server 300 providing the additional contents, for example, URL (Uniform Resource Locator) and identification information of the additional contents along with the message. Thus the user of the smart device 200 can connect to the server 300 on the basis of the URL and according to the identification information of the additional contents, receive and reproduce the additional contents.

The operation of the control unit 170 or operation of an application executed in accordance with the operation of the control unit 170 requires an appropriate replaying operation of the operating system (for example, requesting particular functions provided respectively by constituting elements of FIG. 2 and the operating system, such as input and output interface, communication with external entities, hardware state check, and timer function; and carrying out the corresponding operation), and descriptions of the relaying operation will be omitted.

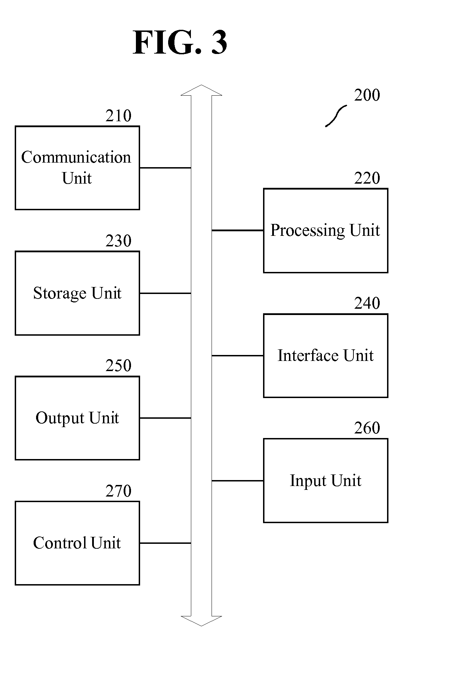

FIG. 3 illustrates a structure of a contents reproducing device according to one embodiment of the present invention.

The smart device 200 can be any one of a smart phone, tablet computer, notebook, and media player capable of accessing a high-speed wireless LAN network. The smart device 200 can comprise a communication unit 210, processing unit 220, storage unit 230, interface unit 240, output unit 250, input unit 260, and control unit 270. The smart device 200 can further comprise a GPS module receiving a GPS signal and calculating current position coordinate information.

The communication unit 210 can comprise a Wi-Fi module for connecting to an external data network through an IP network based on a radio technology such as Wi-Fi and a short range communication module for communicating data with other devices based on a short range communication technology such as Bluetooth and ZigBee. In case the smart device 200 is a smart phone, the communication unit 210 can further comprise a cellular module for connecting to a mobile communication network.

The Wi-Fi module of the communication unit 210 can comprise a Wi-Fi modem (a constituting element meant for processing RF signals) modulating and demodulating signals according to a method selected for a high-speed wireless data network, for example, a wireless LAN network based on Wi-Fi technology and transmitting and receiving the signals to and from a wireless data network; and a Wi-Fi codec encoding data according to communication specifications adopted for wireless data networks and decoding encoded data.

The cellular module of the communication unit 210 can comprise a cellular modem (a constituting element meant for processing RF signals) modulating and demodulating signals according to a method selected for a public mobile communication network, for example, 3G or 4G cellular network and transmitting and receiving the signals to and from a mobile communication network; and a cellular codec encoding data according to communication specifications adopted for mobile communication networks and decoding encoded data.

The processing unit 220 can decode contents streamed or downloaded through the communication unit 210 or interface unit 240 or contents stored in the storage unit 230 by using the corresponding internal decoding module according to the type of the contents; reconstruct the original A/V (Audio/Video) signal; and output the original A/V signal through the output unit 250.

The storage unit 250, being implemented in the form of flash memory for storing a large amount of data, can store contents transmitted through the communication unit 210 or interface unit 240, store application programs executed in the smart device 200 and data required for execution of the application programs, and increase the storage capacity through the interface unit 240.

The interface unit 240 can comprise connection ports meant for data communication, such as a memory card, USB, SCSI, E-SATA, and Firewire; and a control unit for controlling data flow through the connection ports. The interface unit 240 can further comprise HDMI ports meant for outputting video and audio signals processed in the processing unit 240 to an external output device.

The output unit 250 can comprise a display panel for displaying images and text; and a display driving unit for driving the display panel to display arbitrary data on the display panel. Also, the output unit 250 can further comprise a speaker to output an audio signal and a line out port to output an audio signal to an external speaker or earphone.

The input unit 260 can comprise a touch sensor attached at the front of the display panel, a keypad equipped with keys and/or buttons, and an input control unit detecting a user input and/or selection through the touch sensor and keypad and outputting input information corresponding to the user input and/or selection. Also, the input unit 260 can further comprise a microphone for receiving an external audio signal and one or more camera modules for capturing images or videos.

The control unit 270, to carry out operation according to input information from the input unit 260, can transmit relevant data to constituting elements corresponding to the input information among the constituting elements; or receive a signal or control on the basis of the input information. And the control unit 270 can control the display driving unit for displaying a result of the aforementioned operation of the control unit or for displaying a UI screen intended for the user to select a desired operation. The memory installed separately inside the control unit 270 or smart device 200 provides a data storage space required for operation of the control unit 270 or a process carried out by the operation.

Also, the control unit 270 can comprise an operating system (O/S) performing driving hardware resources of the smart device 200; and exchanging relevant signals and/or information with the corresponding resources by executing command codes such as firmware. The operation of the control unit 270 or operation of an application executed by the control unit 270 is based on a relevant relaying operation of the operating system (for examples, requesting hardware elements of FIG. 3; and specific functions provided by the operating system such as input and output through a screen, communication with an external entity based on a protocol, checking hardware state, and timer through an appropriate API (Application Program Interface) and carrying out the operation thereof), the description of which will be omitted in this document.

The control unit 270, if receiving a message notifying of existence of additional contents to be reproduced through the corresponding smart device from a set-top box 100 connected through a short range communication module of the communication unit 210, displays the message through the output unit 250, where the control unit 270 also displays a button indicating whether to reproduce the additional contents, and if the user selects the button through the input unit 260, transmits identification information for identifying the smart device 200 to the set-top box 100 through the short range communication module.

Accordingly, if the set-top box 100 transmits the identification information to the server 300, and the server 300 informs the smart device 200 about transmission of the additional contents through an IP network on the basis of the identification information, the control unit 270 receives the additional contents from the server 300 by downloading or streaming through the Wi-Fi module or cellular module of the communication unit 210 according to the user's selection; and reproduces the additional contents by controlling the processing unit 22 and output unit 250.

Also, the control unit 270, if receiving a message notifying of existence of additional contents to be reproduced through the corresponding smart device from the connected set-top box 100, displays the message through the output unit 250, where link information included in the message and intended to be connected to a server providing the additional contents is displayed, and if the user touches through the input unit 260 an area in which the link information is displayed, the control unit 270 receives the additional contents by connecting to the server by controlling the Wi-Fi module or cellular module of the communication unit 210 and reproduces the received additional contents.

When the set-top box 100 displays a message notifying of irreproducibility of the contents on a screen, and displays a QR code on the screen, which includes link information for connecting to the server 300 providing the corresponding contents, if the user captures the image of the QR code by using a camera module included in the input unit 260, the controller 270 analyzes the QR code and obtains the link information included in the QR code via the processing unit 220, connects to the server 300 according to the link and receives the contents via the Wi-Fi mode or the cellular module, and then reproduces the received contents.

The controller 270 carries out short range wireless communication with the set-top box 100, receives from the set-top box 100 a message notifying of existence of contents that can be reproduced through the smart device 200 but cannot be reproduced in the set-top box 100, displays the message through the output unit 250, delivers identification information of the smart device 200 to the set-top box 100 according to the user's selection (namely, a selection to reproduce contents through the smart device 200), and requests the set-top box 100 to perform transmission of contents from the server 300 or requests contents directly from the server 300 by connecting to the server 300 on the basis of link information included in the message according to the user's selection, where the aforementioned operation can be carried out through a set-top box associated application meant for associated operation with the set-top box 100.

The set-top box associated application can provide a user interface for data transmission and reception between the smart device 200 and set-top box 100 and controlling the data transmission and reception. The set-top box associated application, being connected to the wireless communication unit 130 of the set-top box 100 through the short range communication module of the communication unit 210, can carry out not only the operation related to connection and reproduction of contents but also a part of functions of the input unit 160 of the set-top box 100, namely the role of a remote controller of the set-top box 100.

The set-top box associated application, if receiving a message related to reproduction of contents from the set-top box 100, generates a screen window notifying of reception of the message and displays the generated screen window on the display of the output unit 250, and also displays a button by which the user can select reproduction of the corresponding contents. In case the user wants to reproduce the corresponding contents by selecting the button through the input unit 260, the set-top box associated application may transmit identification information of the smart device 200 to the set-top box 100 or connect to the server directly on the basis of link information included in the message and request the server to transmit the corresponding contents.

The set-top box associated application can carry out a function of a remote controller for controlling the operation of the set-top box 100; if the user selects the function of a remote controller through the input unit 260, the set-top box associated application controls a short range communication module of the communication unit 210, establishes a pairing connection with the set-top box 100, generates a remote controller window including one or more buttons for carrying out a function related to the operation of the set-top box 100, displays the remote controller window on the display of the output unit 250, and if the user selects a button of the remote controller window through the input unit 260 (for example, the user touches an area in which a button is displayed), transmits a control signal corresponding to the selected button to the set-top box 100 through the communication unit 210.

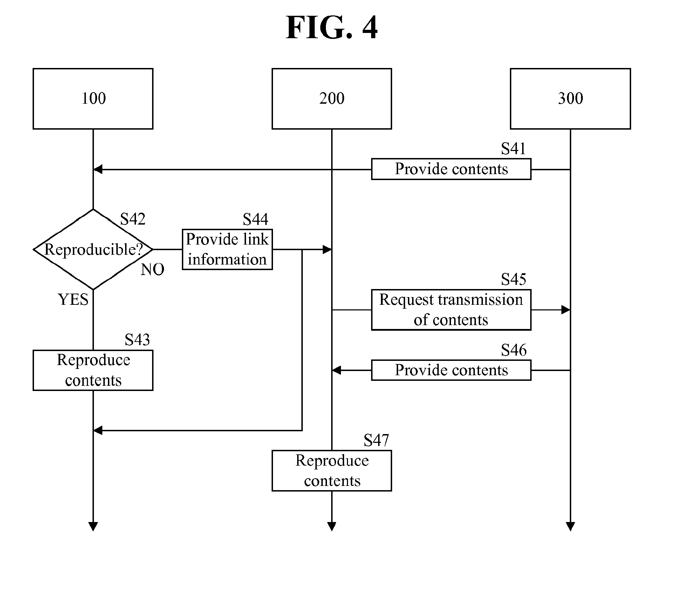

FIG. 4 is a flow diagram illustrating operation of a device receiving contents directly from a contents providing server as a set-top box provides the device with link information about the server according to one embodiment of the present invention.

First, the set-top box 100 is connected to the server 300 through the network unit 110 and receives contents from the server 300, S41. The set-top box 100 can receive contents data from the server 300 or receive metadata describing contents before receiving the contents data. The contents data or metadata of the contents can include identification information for identifying the corresponding contents or link information for connecting to the corresponding contents.

The contents provided by the server 300 may correspond to the contents or a service selected by the user from the webpage managed by the server 300 providing the contents, where the user connects to the webpage through the set-top box 100; or a broadcast program reproduced through the set-top box 100 or additional contents related to another VOD contents.

The additional contents may correspond to comments or responses of viewers of a current broadcast program uploaded in real-time; or reviews and preferences of people who have already watched currently reproduced contents, and links to the contents related to the currently reproduced contents.

The contents or services selected from the webpage managed by the server 300 can include sound sources, games, sports broadcasts, today's fortune, inquiry of winning lottery numbers, recommendation of lottery numbers, and inquiry of weather forecasts.

The server 300 can provide contents or services stored in its internal storage to the set-top box 100 or smart device 200; or provide contents stored in another contents providing server connected through a network by relaying the contents to the set-top box 100 or smart device 200. The server 300 registers and lists up available contents or services in a webpage meant for providing a VOD service to the user of a set-top box, where contents or services relayed or redirected from another server can be listed up as well as the contents within the internal storage.

The server 300, in case the contents provided to the set-top box 100 belong to a different server rather than the internal storage of the server 300, sets the link information for connecting to the corresponding contents to the different server which stores the corresponding contents; or sets the link information to the server 300 itself and if the set-top box 100 or smart device 200 connects to the corresponding link information to obtain the corresponding contents, imports the corresponding contents from a different server storing the corresponding contents and transmits the corresponding contents to the set-top box or smart device which has requested the corresponding contents.

The control unit 170 of the set-top box 100 checks whether the content provided by the server 300 can be reproduced S42; in case the provided content corresponds to video, image, music, or text file, checks whether the processing unit 140 comprises a module for decoding the corresponding file. In case the provided content needs to be reproduced within the OS of the set-top box 100 as is done for an application file, the control unit 170 can determine whether the provided contents can be reproduced.

The control unit 170, if determining that the contents provided from the server 300 can be reproduced (if YES in S42), controls the communication unit 110 and processing unit 140 to receive the corresponding contents from the server 300; decodes the received contents; and outputs the decoded contents S43.

On the other hand, if determining that the contents provided from the server 300 cannot be reproduced (if NO in S42), the controller 170 informs the user that it is unable to reproduce the contents; and delivers to the smart device 200 link information for receiving the contents or link information for connecting to the server 300 S44.

The control unit 170 displays a message notifying of irreproducibility of the contents on a screen output from the set-top box 100; the control unit 170 can also display a QR code on the screen, which includes link information used for receiving the contents by connecting to the server 300 providing the corresponding contents. At this time, the user can store the image of the QR code in the smart device 200 by using a camera module included in the input unit 260 of the smart device 200; the user captures the QR code, analyzes the QR code, and connects to the server 300 according to the link information included in the QR code by executing an application meant for capturing an QR code and executing information included in the QR code.

Also, the control unit 170 displays a message notifying of irreproducibility of the contents on a screen output from the set-top box 100 and controls the wireless communication unit 130 to transmit to the smart device 200 a message notifying of existence of contents to be reproduced through the corresponding device, where the link information used for connecting to the server 300 providing the contents and for receiving the corresponding contents can be transmitted together with the message.

The control unit 270 of the smart device 200 displays a message transmitted by a paired set-top box 100 on the display of the output unit 250, thereby enabling the user to select whether to reproduce the contents in the corresponding device. In case the user requests reproduction, the control unit 270 controls the communication unit 210 and requests transmission of the contents S45 by connecting to the server 300 on the basis of link information included in the message. In response to the request, the server 300 transmits the corresponding contents to the smart device 200, S46.

As described earlier, the server 300, receiving a request for transmission of contents from the smart device 200, immediately transmits those contents stored in its internal storage. As for the contents stored in a different server, the server 300 imports the corresponding contents from the different server and transmits the imported contents to the requesting smart device; or transmits identification information of the corresponding contents and identification information of the requesting smart device 200 to the different server, thereby requesting the different server to transmit the corresponding contents directly to the requesting smart device 200.

The control unit 270 of the smart device 200 controls the communication unit 210, processing unit 220, and output unit 250 to reproduce the contents transmitted from the server 300, S47. In case the contents correspond to video, music, text, or animation in the form of a file, the control unit 270 reproduces the contents immediately while, in case the contents correspond to an application which needs to be executed on the OS of the smart device 200, the control unit 270 downloads and installs the contents, after which the installed application is executed.

In the embodiment of FIG. 4, the operation of the smart device 200, which comprises receiving a notifying message from the set-top box 100, displays the received message on the display, requesting the server 300 to transmit contents according to the user's selection, and receiving contents data transmitted from the server 300, can be carried out through the aforementioned set-top box associated application.

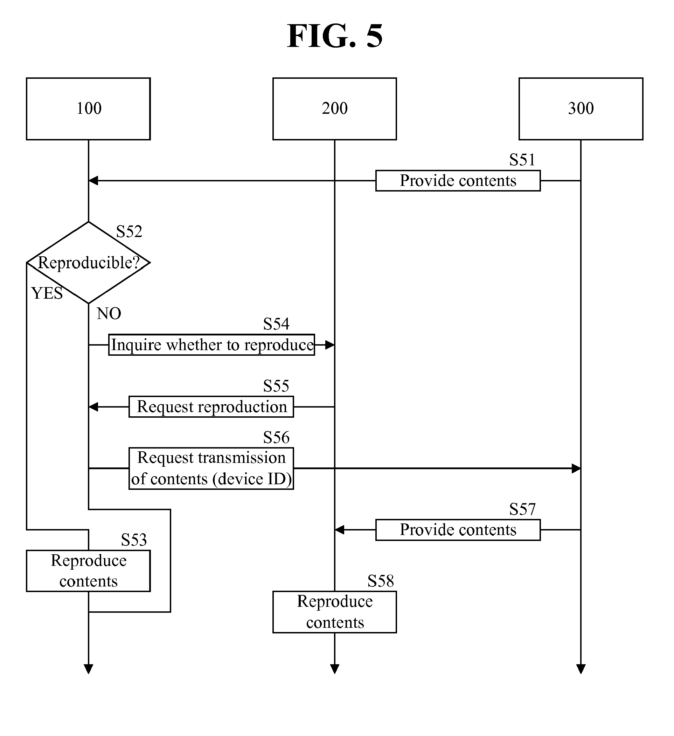

FIG. 5 is a flow diagram illustrating operation of a server providing contents to a device capable of reproducing contents as a set-top box provides the server with identification information of the device according to another embodiment of the present invention.

Same as the embodiment of FIG. 4, the set-top box 100 connects to the server 300 through the network unit 110, receives from the server 300 metadata describing data constituting contents or metadata describing the contents S51, and determines whether the contents provided from the server 300 is reproducible S52. The contents data or metadata of the contents can include identification information for identifying the corresponding contents and/or link information for connecting to the corresponding contents.

The controller 170, if determining that the contents provided from the server 300 can be reproduced (if YES in S52), controls the communication unit 110 and processing unit 140 to receive the corresponding contents from the server 300; decodes the received contents; and outputs the decoded contents S53.

On the other hand, if determining that the contents provided from the server 300 cannot be reproduced (if NO in S52), the controller 170 displays a message notifying of irreproducibility of the contents on the screen output from the set-top box 100; and delivers to one or more smart devices 200 paired with the set-top box 100 a message informing of existence of additional contents to be reproduced through the corresponding device, thus inquiring whether to reproduce the corresponding contents S54.

The control unit 270 of the smart device 200 displays a message transmitted by a paired set-top box 100 on the display of the output unit 250, thereby enabling the user to select whether to reproduce the corresponding contents in the corresponding device. In case the user requests reproduction, the control unit 270 controls the communication unit 210 to transmit a content reproduction message including identification information for identifying the corresponding device to the paired set-top box 100, S55.

In the case of a smart phone, the identification information for identifying the smart device 200 can be one of a phone number, UUID (Universally Unique Identifier) for identifying an application installed in the smart device 200 for data communication and pairing between the set-top box 100 and the smart device 200, MAC address, and device identifier such as a serial number of a device.

The control unit 170 controls the network unit 110 to request the server 300 to transmit the corresponding contents to the smart device 200, S56. At this time, identification information of the corresponding contents and identification information of the smart device 200 can be transmitted together.

If the control unit 170 receives from the server 300 link information meant for connecting to the corresponding contents at the step of S51 but the corresponding contents are stored in a different server, the control unit 170 may connect to the different server storing the corresponding contents based on the link information and request the different server to transmit the corresponding contents directly to the smart device 200 corresponding to the accompanying identification information.

In response to the request, the server 300 transmits the contents requested by the set-top box 100 to the smart device 200 on the basis of the identification information S57; and the control unit 270 of the smart device 200 controls the communication unit 210, processing unit 220, and output unit 250 to reproduce the contents transmitted from the server 300, S58.

Meanwhile, the control unit 170, instead of sending identification information of the corresponding contents and identification information of the smart device 200 to the server 300 and requesting the server 300 to transmit the corresponding contents to the smart device 200 at the step of S56, requests the server to transmit the corresponding contents to the set-top box 100 while sending only the identification information of the corresponding contents to the server 300 and transmits the contents transmitted from the server 300 to the smart device 200 by controlling the wireless communication unit 130.

Same as the embodiment of FIG. 4, the operation of the smart device 200 according to the embodiment of FIG. 5 can also be carried out through a set-top box associated application.

Contents of different specifications that cannot be reproduced by a set-top box, contents requiring a complicated input and output interface, or interactive services can be reproduced through a smart device which is paired with the set-top box and equipped with excellent functions.

From the viewpoint of companies manufacturing set-top boxes, since users can enjoy various types of contents and interactive services in a convenient manner without implementing all of the required functions in a set-top box by accessing a portal through the set-top box, consumption of contents can be facilitated and at the same time, development costs of set-top box hardware can be reduced.

The present invention enables various types of contents of differing specifications to be reproduced without replacing set-top boxes by redirecting the contents to other devices.

Also, the present invention facilitates consumption of a large number of new contents through set-top boxes.

The preferred embodiments of the present invention described above are provided to illustrate the technical principles of the present invention; thus, it should be understood that those skilled in the art to which the present invention belongs will be able to improve, change, substitute, or modify the embodiments in various other ways without departing from the technical principles and scope of the present invention defined by the appended claims.

## Claims

1. A method for relaying contents in a contents reproducing device (100), comprising:
determining whether content is reproducible; and
in case reproduction of the content is not possible, notifying of existence of the content reproducible in a second device (200), where the notifying provides link information about a device to be connected to receive the content.

2. The method of claim 1, wherein the notifying is expressed by displaying a barcode or multi-dimensional code representing the link information.

3. The method of claim 1 or 2, wherein the notifying provides one or more second devices with a message including URL meant for connecting to a server (300) providing the content.

4. The method of any one of proceeding claims, wherein the content is additional content related to main content being reproduced through the contents reproducing device (100).

5. A method for relaying contents in a contents reproducing device (100), comprising:
determining whether content is reproducible;
in case reproduction of the content is not possible, notifying one or more second devices (200) connected wired or wirelessly of existence of the content reproducible in the corresponding second device (200); and
if a request for reproducing the content is received from the one or more second devices (200), while providing information about a second device (200) which has sent the reproduction request to a server (300) providing the content, requesting the server (300) to provide the content to the second device (200).

6. The method of claim 5, wherein the notifying transmits a message inquiring whether to reproduce the content in the corresponding second device (200) to the one or more second devices (200).

7. The method of claim 5 or 6, wherein the information about a second device (200) is any one of a phone number, UUID (Universally Unique IDentifier), MAC address, and device identifier.

8. The method of any one of claims 5 to 7, wherein the content is additional content related to main content being reproduced through the contents reproducing device (100).

9. A contents reproducing device (100), comprising:
a network unit (120) configured to be connected to a server (300) and communicate data;
a reproducing unit (140) configured to reproduce contents; and
a control unit (170) configured to determine whether content provided from the server (300) is reproducible, in case reproduction of the content is not possible, notify of existence of the content reproducible in a second device (200), and provide link information about a device to be connected to receive the content.

10. The device of claim 9, further comprising a graphic generating unit configured to generate a screen expressing information by using text or drawings, where the control unit (170) generates a barcode or multi-dimensional code expressing the link information by controlling the graphic generating unit and displays the generated code on the screen.

11. The device of claim 9 or 10, further comprising a wireless communication unit (130) configured to connect to the second device (200) wirelessly, where the control unit (170) provides one or more second devices (200) with a message including URL meant for connecting to the server (300) providing the content by controlling the wireless communication unit (130).

12. A contents reproducing device (100), comprising:
a network unit (120) configured to be connected to a server (300) and communicate data;
a wireless communication unit (130) configured to connect to a second device wirelessly;
a reproducing unit (140) configured to reproduce contents; and
a control unit (170) configured to determine whether content provided from the server (300) is reproducible, in case reproduction of the content is not possible, notify one or more second devices (200) connected through the wireless communication unit (130) of existence of the content reproducible in the corresponding second device (200), and if a request for reproducing the content is received from the one or more second devices (200), while providing information about the second device (200) which has sent the reproduction request to the server (300) by controlling the network unit (120), request the server (300) to provide the content to the second device (200).

13. The device of claim 12, wherein the control unit (170) sends a message inquiring whether to reproduce the content in the corresponding second device (200) to the one or more second devices (200) by controlling the wireless communication unit (130).

14. The device of claim 12 or 13, wherein the information about a second device (200) is any one of a phone number, UUID (Universally Unique IDentifier), MAC address, and device identifier.
